Europäisches Patentamt

European Patent Office

Office européen des brevets

(19)

Publication number: **0 290 771**
**A2**

## EUROPEAN PATENT APPLICATION

(21) Application number: **88105214.6**

(22) Date of filing: **30.03.88**

(51) Int. Cl.4: **C08F 20/12**

(30) Priority: **30.03.87 US 32112**

(43) Date of publication of application:
**17.11.88 Bulletin 88/46**

(84) Designated Contracting States:
**CH DE FR GB IT LI NL**

(71) Applicant: **HERCULES INCORPORATED**
**Hercules Plaza**
**Wilmington Delaware 19894(US)**

(72) Inventor: **Craig, Daniel Horace**
**502 Cobblers Lane Mendenhall Village**
**Hockessin Delaware 19707(US)**

(74) Representative: **Lederer, Franz, Dr. et al**
**Van der Werth, Lederer & Riederer**
**Patentanwälte Lucile-Grahn-Strasse 22**
**D-8000 München 80(DE)**

(54) **Small particle size surface active protective colloid-stabilized latexes derived from monomers of high aqueous phase grafting tendencies.**

(57) Disclosed are aqueous polyacrylate dispersions, i.e., aqueous latex dispersions of acrylate polymers, having improved rheological and stability characteristics prepared by polymerization of acrylic esters, methacrylic esters and mixtures thereof in the presence of, by weight of the total monomer content, a) from about 0.05 to about 3.5% of at least one surface active protective colloid, and b) from about 0.01 to 1% of an azo initiator. The resultant aqueous polyacrylate dispersions are useful in the manufacture of latex paints, binders for nonwoven materials, water-based inks, paper coatings and water-borne adhesives, such as pressure-sensitive adhesives.

EP 0 290 771 A2

# SMALL PARTICLE SIZE SURFACE ACTIVE PROTECTIVE COLLOID-STABILIZED LATEXES DERIVED FROM MONOMERS OF HIGH AQUEOUS PHASE GRAFTING TENDENCIES

This invention relates to aqueous polyacrylate dispersions, i.e., latices of acrylate polymers, that are useful for instance in the manufacture of latex paints, binders for nonwoven materials, water-based inks, paper coatings and water-based adhesives, and to processes for their preparation.

Conventional acrylate latices are produced by emulsion polymerization carried out in aqueous media. According to classical analysis, an emulsion polymerization is considered to contain a three-phase reaction system consisting of large (about 1500 nm diameter) droplets of the monomer, an aqueous phase containing a dissolved initiator, and colloidal particles of monomer-swollen polymer (usually 50-150 nm diameter). See, "Polymerization Mechanisms and Processes", 18 Encyclopedia of Chemical Technology pages 742-43 (John Wiley & Sons, Inc., 3rd Ed. 1982).

It is known that the presence of protective colloids during the manufacture of polyacrylate dispersions or latices, from reaction mixtures having a high acrylate or methacrylate content, usually results either in coagulated dispersions or in extremely viscous dispersions that are unsuitable for use as paint binders or any other use. Although the presence of more than about 50% vinyl acetate, by weight of the total monomer, enables a latex having good stability and rheological characteristics to be obtained in the presence of a protective colloid such as hydroxyethyl cellulose ("HEC") or polyvinyl alcohol, and permits good control of viscosity, when the vinyl acetate comonomer is not used or is used in amounts less than 50%, a stable latex cannot be obtained in the presence of a protective colloid.

A number of methods have been developed to permit the successful incorporation of protective colloids during the emulsion polymerization of reaction mixtures having a high acrylate or methacrylate content. For example, British Patent 1,278,813 discloses the use of emulsion stabilizers, such as allyl alcohols, allyl halides and low molecular weight aliphatic alcohols, and several other patents disclose the use of other additives, for instance molecular weight regulators, such as mercaptoacetic acid and cyclohexylamine (U.S. Patent 4,265,796), or small amounts of water-soluble monomers having conjugated unsaturation such as furoic acid, or styrene sulfonic acid (U.S. Patent No. 4,659,771).

Such methods are all disadvantageous in that they require the use of additives. Other known processes provide for the gradual addition of the protective colloid during the polymerization reaction (for instance, U.S. 3,876,596), but the resultant latices have a high viscosity, coarse particle size and poor processing characteristics.

There is need for a method of producing a polymer latex by polymerization of acrylic or methacrylic monomers that does not require the presence of additives and produces latices with small particle sizes, that is, a weight average particle diameter less than about 200 nm, high mechanical stability, low viscosity, and good processing characteristics.

There has also been taught, in U. S. Patent No. 4,397,968, that an aqueous dispersion may be prepared by carrying out polymerization in the absence of emulsifiers, wherein the organic catalysts are organic catalysts, especially hydroperoxides and azo compounds. This process requires at least 4%, by weight of the monomers, polyvinyl alcohol. Such high levels of protective colloid are generally undesirable. In addition, this process requires the step of preparing a pre-emulsion, which step is often undesirable.

According to the invention, a process for making aqueous polyacrylate dispersions by polymerizing acrylic ester meth acrylic esters or their mixtures in the presence of a protective colloid and a free-radical polymerization initiator, is characterized in that the protective colloid includes from about 0.05 to about 3.5% by weight of the total monomer content of a surface-active protective colloid, and the initiator is, by weight of total monomer content, from about 0.01 to about 1% of an azo initiator.

Acrylic esters and methacrylic esters suitable for use in the practice of this invention include alkyl acrylates and methacrylates wherein the alkyl group contains 22 or less carbon atoms. Preferably at least 50%, by weight, of the total monomers are alkyl acrylates and methacrylates having less than 10 carbon atoms. Typical acrylic esters and methacrylic esters having less than 10 carbon atoms include methyl acrylate, methyl methacrylate, ethyl acrylate, ethyl methacrylate, isopropyl acrylate, isopropyl methacrylate, n-butyl acrylate, n-butyl methacrylate, isobutyl acrylate, isobutyl methacrylate, 2-ethylhexyl acrylate, 2-ethylhexyl methacrylate, t-butyl acrylate, t-butyl methacrylate, 3,3-dimethylbutyl acrylate and 3,3-dimethyl butyl methacrylate. Suitable $C_{10-22}$ alkyl esters of acrylic and methacrylic acid include decyl acrylate, decyl methacrylate, hendecanyl methacrylate, lauryl methacrylate, tridecanyl methacrylate, myristyl acrylate, myristyl methacrylate, pentadecanyl methacrylate, arachidyl methacrylate, behenyl methacrylate, 10-methyl hendecanyl methacrylate and 2-ethyl-lauryl methacrylate. These monomers can be homopolymerized or copolymerized with each other.

In addition to being copolymerized with each other, the aforementioned acrylates and methacrylates can be copolymerized with other types of olefinically unsaturated monomers capable of addition type polymerization, including unsubstituted and substituted styrene, such as alpha-methylstyrene, acrylic or methacrylic acid, vinyl and vinylidene halides, allyl esters of saturated monocarboxylic acids, vinyl esters, vinyl ethers, vinyl ketones, dialkyl esters of monoethylenically unsaturated dicarboxylic acids, amine containing ethylenically unsaturated monomers, ethylenically unsaturated monocarboxylic and polycarboxylic acids and the anhydrides, ni triles, unsubstituted and substituted (including n-substituted) amides of all said acids.

Suitable vinyl and vinylidene halides include vinyl chloride, vinylidene chloride, 2-cloropropene, and 3,3,3-trichloro-2-chloropropene.

Suitable vinyl esters include aliphatic vinyl esters, such as vinyl formate, vinyl acetate, vinyl propionate, vinyl butyrate, vinyl isobutyrate, vinyl valerate, and vinyl caproate, and suitable allyl esters include allyl esters of saturated monocarboxylic acids, such as, allyl acetate, allyl propionate and ally lactate. Although the vinyl ester and allyl ester monomers may be used in the general ranges described below, they are generally used in amounts ranging up to about 10% by weight of the total weight of monomers used. The allyl esters of saturated monocarboxylic acids are generally used in relatively small amounts together with larger amounts of one or more different vinyl monomers, particularly with aliphatic vinyl esters such as vinyl acetate.

Typical vinyl ethers include methylvinyl ether, ethylvinyl ether and n-butylvinyl ether and typical vinyl ketones include methylvinyl ketone, ethylvinyl ketone and iso-butylvinyl ketone. Suitable dialkyl esters of monoethylenically unsaturated dicarboxylic acids include diethyl maleate, dibutyl maleate, dioctyl maleate, diisooctyl maleate, dinonyl maleate, diisodecyl maleate, ditridecyl maleate, dipropyl fumarate, dibutyl fumarate, dioctyl fumarate, diisooctyl fumarate, didecyl fumarate, dibutyl itaconate and dioctyl itaconate.

Monoethylenically unsaturated monocarboxylic acids, such as acrylic acid, methacrylic acid, ethacrylic acid and crotonic acid; monoethylenically unsaturated dicarboxylic acids, such as maleic acid, fumaric acid, itaconic acid and citraconic acid; and monoethylenically unsaturated tricarboxylic acids, such as aconitic acid and the halogen-substituted derivatives, e.g., alpha-chloroacrylic acid, and anhydrides of these acids, such as, e.g., maleic anhydride and citraconic anhydride are suitable for use as comonomers in the practice of this invention.

Acrylonitrile, alpha-chloro-acrylonitrile and methacrylonitrile are among the corresponding nitriles of such acids which can be used as comonomers. Suitable amides of such acids include unsubstituted amides such as acrylamide, methacrylamide and other alpha-substituted acrylamides and N-substituted amides obtained by conventional reaction of the amides of the aforementioned mono-and poly-carboxylic acids with an aldehyde, such as formaldehyde. Typical N-substituted amides include N-methylolacrylamide, N-methylolmethacrylamide, alkylated N-methylolacrylamides and N-methylolmethylmethacrylamide.

Amine-containing ethylenically unsaturated monomers which can be used in the practice of this invention include substituted and unsubstituted aminoalkyl acrylates, hydrochloride salts of amino monomers and methacrylates, such as beta-aminoethylacrylate, beta-aminoethylmethacrylate, betadimethylaminoethylacrylate, beta-dimethylaminoethylmethacrylate. Typical hydroxy-containing monomers include betahydroxyethylacrylate, beta-hydroxypropylacrylate, gammahydroxypropylacrylate and beta-hydroxyethylmethacrylate.

Styrene, styrene derivatives, and acrylonitrile comonomers may be present in amounts greater than about 50%, by weight of total monomer content, for example, in amounts up to about 75%. However, typically the comonomer is present in an amount from about 0.5% to less than 50%, by weight of the total monomer content, preferably from about 0.5% to about 25%, most preferably from about 1% to about 10%.

Surface active protective colloids useful in this invention are protective colloids which lower the surface tension of water below 65 dynes/cm at a 0.1% concentration by weight, based on the weight of the total solution. Typical surface active protective colloids include alkylhydroxyalkyl cellulose such as ethylhydroxyethyl cellulose, partially and fully hydrolyzed polyvinyl alcohols and copolymers thereof, polyacrylic acid homo-and copolymers and partial salts thereof, polyacrylamide copolymers, polyacrylate copolymers and salts, poly(alkylvinyl ether-maleic anhydride)s such as poly(methylvinyl ether-maleic anhydride), polyvinylpyrroli done homopolymers and copolymers, gelatin, casein, hydroxypropyl cellulose, methyl hydroxypropyl cellulose, carboxymethyl hydroxypropyl cellulose, and hydrophobically modified water soluble polymers such as those described in U.S. Patent No. 4,228,277 (for example, hydrophobically modified hydroxyethyl cellulose (HMHEC)). Preferred protective colloids are hydrophobically modified hydroxyethyl cellulose and polyvinylpyrrolidone.

3

Although the amount of surface active protective colloid used will vary depending on the desired viscosity, particle size and latex properties, generally from about 0.05 to about 3.5%, by weight of the total monomer content, is employed, preferably from about 0.2% to about 1%.

Non-surface active protective colloids, such as hydroxyethyl cellulose, carboxymethyl cellulose (sodium and other salts), carboxymethyl hyrdoxyethyl cellulose and non-surface active water soluble starch derivatives, can also be present during polymerization per this invention. Generally, if used, non-surface active agents are used in an amount of 0.05 to about 5%, by weight of the total monomer content.

The free radical polymerization initiators useful in this invention are all azo initiators, including organosoluble and water soluble azo initiators, such as azobis isobutyronitrile and azobis cyanovaleric acid dipotassium salt or azobis isobutyramidine dihydrochloride, respectively. The azo initiators are typically used in the forementioned amounts, preferably in an amount of about 0.05 to about 0.5%, most preferably 0.1 to 0.25%, by weight of the total monomer content.

Organo-soluble, water-insoluble peroxide initiators, such as benzoyl peroxide and lauroyl peroxide, less than about 0.1% (based on the aqueous phase) soluble in water in the presence of the above monomers, may be used in conjunction with the azo initiators.

Water-soluble peroxide initiators, e.g., hydrogen per-oxide, persulfate salts, etc., which are traditionally associated with the emulsion polymerization process and are gener ally used to define the process of emulsion polymerization, are not useful in the present invention, except at concentrations below 0.05%, based on the weight of the total monomers, their utilization in greater amounts resulting in either coagulated latexes or latexes of impractically high viscosity.

Anionic, cationic, nonionic and amphoteric emulsifiers and mixtures thereof known in the art are useful in the practice of this invention and may be necessary when lower amounts of some protective colloids, e.g., polyvinyl alcohol, are used, but are not always necessary for the successful use of this invention. Suitable emulsifiers include polyglycol ethers, sulfonated paraffin hydrocarbons, higher alkyl sulfates such as lauryl sulfate, alkali metal salts of fatty acids such as sodium stearate and sodium oleate, sulfuric acid esters of fatty alcohols, ethoxylated $C_{4-12}$ alkyl phenols and their sulfonation products and also sulfosuccinic acid esters in amounts usually of from 0.1 to 5.0% by weight based on the total weight of the monomers.

Although this invention cannot be considered to be strictly limited to "emulsion polymerization" since organosoluble initiators can be used and by definition emulsion polymerization requires the presence of a water soluble initiator, and also because the polymerization mechanisms by which polymerization takes place are not fully understood, the process of polymerization of this invention can be carried out using any of the known methods of emulsion polymerization including batch, semi-batch, continuous, thermal, or redox processes with batch, semi-batch or continuous addition of any of the aforementioned ingredients in any combination so long as the constraints mentioned above on the ingredients, in particular the initiator, are maintained.

The invention is evaluated and illustrated in the following experimental results, indicated either as examples of the invention or comparison examples, in which all parts and percentages, (like all parts and percentages used in this specification) are by weight, and weight percentages are based on the total latex weight, unless otherwise indicated.

## Example 1

This example illustrates polymerization, per this invention, in the presence of a surface active protective colloid and an organo-soluble, water-insoluble azo initiator.

A reaction vessel equipped with a stirrer, reflux condenser, thermometer, two feed ports, a nitrogen inlet and a water jacket was charged with 48.65 parts distilled water, 1.15 part nonylphenol ethoxylate mixed phosphate ester containing 9 moles of ethylene oxide surfactant, and 0.2 part HMHEC having a hydroxyethyl molar substitution of about 3.5 and hydrophobically substituted with 0.5% by weight of C-16 alkyl chain, under a nitrogen blanket. Stirring was continuous throughout the reaction. The temperature of the reactor was raised to 85°C, via circulating hot water, at which time a monomer feed comprising 0.05 part of azobis isobutyronitrile which was dissolved in 44.0 parts of a monomer mixture comprising, by weight of the monomer mixture, 42.7% butyl acrylate, 56.8% methyl methacrylate, and 0.5% methacrylic acid was added in a slow but continuous fashion over a 3-hour period. The reaction temperature was maintained at 85°C for 1 hour after the addition of the two continuous feeds at which time the reaction mixture was cooled to room temperature, filtered through cheese cloth, and characterized.

Example 2

This example illustrates polymerization, per this invention, in the presence of a surface active protective colloid and an organo-soluble, water-insoluble azo initiator.

The procedure and formulation of example 1 were used except that the 1.15 parts of mixed phosphate ester surfactant was replaced by 1.0 part of sodium dihexylsulfosuccinate and the acrylic monomer mixture was replaced by a 50/50/1 (parts by weight) mixture of styrene/butyl acrylate/methacrylic acid at the same concentration.

Example 3

This is a comparative example illustrating emulsion polymerization in the presence of a water soluble peroxide initiator and a nonsurface active protective colloid.

A reaction vessel equipped with a stirrer, reflux con denser, thermometer, two feed ports, a nitrogen inlet and a water jacket was charged with 48.65 parts distilled water, 1.15 part nonylphenol ethoxylate mixed phosphate ester containing 9 moles of ethylene oxide surfactant, 0.2 parts hydroxyethyl cellulose having a Brookfield viscosity of 93 cps in a 5% aqueous solution at 25°C and a hydroxyethyl molar substitution of 2.5, under a nitrogen blanket. Stirring was continuous throughout the reaction. The temperature of the reactor was raised to 85°C, via circulating hot water, at which time 6.0 parts of 2% potassium persulfate and 44.0 parts of a monomer mixture comprising, by weight, 42.7% butyl acrylate, 56.8% methyl methacrylate, and 0.5% methacrylic acid were added separately, but concurrently, in a slow but continuous fashion over a 3 hour period. The reaction temperature was maintained at 85°C for 1 hour after the addition of the two continuous feeds at which time the reaction mixture was cooled to room temperature, filtered through cheese cloth, and characterized.

Example 4

This is a comparative example showing polymerization without a protective colloid.

The procedure and formulation of example 1 were carried out, except that the initiator was 0.05 part of azobis isobutyronitrile which was dissolved in the monomer feed, the mixed phosphate ester surfactant was replaced by 2.3 parts Aerosol A-102 surfactant (Aerosol is a trademark of American Cyanamid for ethoxylated alcohol half ester of disodium salt of sulfosuccinic acid) and 0.7 part octylphenol ethoxylate surfactant containing 10 moles of ethylene oxide and the hydrophobically modified hydroxyethyl cellulose was omitted completely.

Example 5

This is a comparative example showing polymerization without a protective colloid.

The procedure and formulation of example 1 were used except that hydrophobically modified hydroxyethyl cellulose was omitted completely.

The resulting polymer dispersions were evaluated and the results are shown in the following Table.

## Table

### Latex Data

| Example | pH | Solids wt. % | Viscosity cps[1] | Particle Size[2] microns | Particle Size After Mechanical Shear[4] |
|---|---|---|---|---|---|
| 1 (Invention) | 4.8 | 44 | 20,000 | 0.10 | 0.25 |
| 2 (Invention) | 4.6 | 48 | 20,000 | 0.14 | 0.22 |
| 3 (Comparison) | 2.8 | 32[3] | 20,000 | 4.0 | - |
| 4 (Comparison) | 5.1 | 46 | 122 | 0.10 | 0.45 |
| 5 (Comparison) | 5.3 | 48 | 11,200 | 0.10 | 0.40 |

1 Brookfield LVT viscosity at 25°C.
2 Coulter Nanosizer (weight average particle diameter).
3 Coagulation of latex during manufacture prevented full addition of monomer.
4 Ten minutes in Waring Blender at highest setting.

All of the samples, except the comparative sample produced in example 3, had particle sizes of 0.15 microns or less which is desirable for use in many applications. In fact, it is somewhat surprising that emulsions with such small particle sizes resulted as polyacrylate polymers produced by emulsion polymerization techniques in the presence of surface active protective colloids typically have particle sizes greater than 0.2 micron. Particles sizes greater than 1 micron are undesirable and, therefore, the dispersion produced in example 3, using a water soluble peroxide initiator was not suitable for most purposes, in particular, for use in latex paint formulations. All of the dispersions had suitable viscosity for use in latex paints.

All of the dispersions were examined using transmission electron microscopy to determine whether agglomeration occurred. All of the samples, except that of comparative example 3, were found to have no agglomeration. The sample produced in example 3 agglomerated.

Mechanical stability was evaluated by comparing particle size before and after application of shear. The data in the above Table show that latices polymerized per this invention have superior mechanical stability over polymers resulting from polymerization without protective colloids, as illustrated by the relatively small increase in average particle diameter in the presence of protective colloids.

The rheological properties of the samples were also compared, by observing their properties when hand mixed. The dispersions of this invention exhibited the improved rheological properties (i.e., less pseudoplasticity) generally attributed to use of protective colloids.

Aqueous dispersions of this invention are protective colloid containing polyacrylate latex polymer dispersions having improved rheological properties which have less tendency to agglomerate than polyacrylate emulsions prepared by conventional emulsions polymerization techniques in the presence of protective colloids. Polymer latices of this invention have particle sizes less than about 1 micron, in fact, in many instances smaller than 0.2 micron, and are useful in the manufacture of latex paints, binders for nonwoven materials, water-based inks, paper coatings and water-borne adhesives, such as pressure-sensitive adhesives.

While the invention has been described with respect to specific embodiments, it should be understood that they are not intended to be limiting and that many variations and modifications are possible without departing from the scope of this invention.

## Claims

1. A process for making an aqueous polyacrylate dispersion by polymerizing acrylic esters, methacrylic esters or their mixtures in the presence of a protective colloid and a polymerization initiator, characterized in that the protective colloid includes from about 0.05 to about 3.5% of a surface-active protective colloid, the initiator includes, by weight of total monomer content, from about 0.01 to about 1% of an azo initiator, and the aqueous polyacrylate dispersion prepared as a result of the process has a particle size less than about 1000 nm.

2. A process as claimed in claim 1, further characterized in that the initiator is a water-soluble azo initiator.

3. A process as claimed in claim 1, further characterized in that the initiator is an organo-soluble azo initiator.

4. A process as claimed in claim 1, further characterized in that the initiator is azobis isobutyronitrile, the azobis cyanovaleric acid dipotassium salt or azobis isobutyramidine dihydrochloride.

5. A process as claimed in one of claims 1-4, further characterized in that the esters polymerized are one or more alkyl acrylates or methacrylates in which the alkyl group contains less than 22 carbon atoms.

6. A process as claimed in claim 5, further characterized in that the esters polymerized are one or more alkyl acrylates or methacrylates in which the alkyl group contains less than 10 carbon atoms.

7. A process as claimed in any of the preceeding claims, further characterized in that the ester or esters are copolymerized with a monomer or monomers capable of addition polymerization and consisting of unsubstituted or substituted styrene, acrylic or methacrylic acid, a vinyl or vinylidene halide, an allyl ester of a saturated monocarboxylic acid, a vinyl ester, a vinyl ether, vinyl ketones, a dialkyl ester of a monoethylenically unsaturated dicarboxylic acid, an amine-containing ethylenically unsaturated monomer, an ethylenically unsaturated monocarboxylic or polycarboxylic acid, or an anhydride, nitrile, or unsubstituted or substituted amide of any of the said acids.

8. A process as claimed in any of the preceeding claims, further characterized in that the surface active protective colloid is an alkylhydroxyalkyl cellulose, a polyacrylic acid homopolymer or copolymer or partial salt thereof, a polyacrylamide copolymer, a polyacrylate copolymer or salt, a poly(alkylvinyl ether-maleic anhydride), a polyvinylpyrrolidone homopolymer or copolymer, gelatin, casein, partially or fully hydrolyzed polyvinyl alcohol or copolymer thereof, hydroxypropyl cellulose, methyl hydroxypropyl cellulose, carboxymethyl hydroxypropyl cellulose or hydrophobically modified hydroxyethyl cellulose.

9. A process as claimed in any of the preceeding claims, further characterized in that the surface active protective colloid is an alkylhydroxyalkyl cellulose, a polyacrylic acid homopolymer or copolymer or partial salt thereof, a polyacrylamide copolymer, a polyacrylate copolymer or salt, a poly(alkylvinyl ether-maleic anhydride), a polyvinylpyrrolidone homopolymer or copolymer, gelatin, casein, hydroxypropyl cellulose, methyl hydroxypropyl cellulose, carboxymethyl hydroxypropyl cellulose or hydrophobically modified hydroxyethyl cellulose.

10. A process as claimed in claim 6, further characterized in that the surface active protective colloid is a hydrophobically modified hydroxyethyl cellulose or polyvinylpyrrolidone.

11. A process as claimed in any of the preceeding claims, further characterized in that the surface-active protective colloid is contained in an amount of 0.01 to about 1%.

12. A process as claimed in any of the preceeding claims, further characterized in that the resultant polyacrylate latex has a particle size less than 200 nm.

13. A process as claimed in any of the preceeding claims, further characterized in that the resultant polyacrylate latex contains an anionic, cationic, nonionic or amphoteric emulsifier.

14. An aqueous polyacrylate dispersion prepared by the process of any of the preceeding claims.